# FASCICULE DE BREVET EUROPEEN

(11) **EP 3 857 848 B1**
(45) Date de publication et mention de la délivrance du brevet: **31.08.2022**
(21) Numéro de dépôt: 19802235.2
(22) Date de dépôt: 26.09.2019
(51) Int. Cl.: H04L 9/40

(54) **PROCÉDÉ D'ALLOCATION D'UN IDENTIFIANT À UN NOEUD CLIENT, PROCÉDÉ D'ENREGISTREMENT D'UN IDENTIFIANT, DISPOSITIF, NOEUD CLIENT, SERVEUR ET PROGRAMMES D'ORDINATEURS CORRESPONDANTS**
VERFAHREN ZUR ZUORDNUNG EINES IDENTIFIKATORS ZU EINEM CLIENT-KNOTEN, VERFAHREN ZUR AUFZEICHNUNG EINES IDENTIFIKATORS, ENTSPRECHENDE VORRICHTUNG, CLIENT-KNOTEN, SERVER UND COMPUTERPROGRAMME
METHOD FOR ALLOCATING AN IDENTIFIER TO A CLIENT NODE, METHOD FOR RECORDING AN IDENTIFIER, CORRESPONDING DEVICE, CLIENT NODE, SERVER AND COMPUTER PROGRAMS

(30) Priorité: 28.09.2018 FR 1859044
(43) Date de publication de la demande: 04.08.2021
(73) Titulaire: Orange, 92130 Issy-les-Moulineaux (FR)
(72) Inventeur: BOUCADAIR, Mohamed, 92326 CHÂTILLON CEDEX (FR); JACQUENET, Christian, 92326 CHÂTILLON CEDEX (FR)
(74) Mandataire: Vidon Brevets & Stratégie
(86) Numéro de dépôt international: PCT/FR2019/052279
(87) Numéro de publication internationale: WO 2020/065232

(56) Documents cités:
- US-A1- 2018 007 084
- US-A1- 2018 109 554
- US-A1- 2018 109 555
- REDDY T ET AL: "Distributed Denial-of-Service Open Threat Signaling (DOTS) Signal Channel Specification; draft-ietf-dots-signal-channel-25.txt", DISTRIBUTED DENIAL-OF-SERVICE OPEN THREAT SIGNALING (DOTS) SIGNAL CHANNEL SPECIFICATION; DRAFT-IETF-DOTS-SIGNAL-CHANNEL-25.TXT; INTERNET-DRAFT: DOTS, INTERNET ENGINEERING TASK FORCE, IETF; STANDARDWORKINGDRAFT, INTERNET SOCIETY (ISOC) 4, RUE DES FALA, no. 25, 6 septembre 2018 (2018-09-06), pages 1-90, XP015128447, cité dans la demande

## Description

### 1. Domaine de l'invention

Le domaine de l'invention est celui des communications au sein d'un réseau de communication, par exemple un réseau IP, et notamment celui des services IP à valeur ajoutée. Plus précisément, l'invention offre une solution pour protéger le réseau de communication et les terminaux raccordés à ce réseau contre les attaques informatiques.

En particulier, l'invention offre une solution permettant d'allouer un identifiant unique à un nœud client connecté au domaine client et d'enregistrer cet identifiant en association avec un identifiant du domaine client.

L'invention trouve notamment des applications dans le domaine de la mitigation d'attaques par déni de services distribuées (en anglais DDoS, pour « Distributed Denial of Service »), mettant par exemple en œuvre, mais non exclusivement, une architecture de type DOTS (en anglais « DDoS Open Threat Signaling »), telle que normalisée par l'IETF.

### 2. Art antérieur et ses inconvénients

Pour rappel, une attaque DDoS est une tentative de rendre des ressources, par exemple des ressources réseau ou de calcul, indisponibles pour leurs utilisateurs. De telles attaques peuvent être massivement déployées en compromettant un grand nombre d'hôtes, et en utilisant ces hôtes pour amplifier les attaques.

Afin de pallier à ces attaques DDoS, des services de détection et de mitigation des attaques DDoS sont proposés par certains fournisseurs d'accès ou de services à leurs clients. De tels services de mitigation (en anglais DPS pour « DDoS Protection Services ») peuvent être hébergés au sein des infrastructures exploitées par les fournisseurs d'accès ou dans le « cloud » (en français « nuage »). Ils permettent notamment de distinguer le trafic « légitime », i.e., les données consenties par l'utilisateur, du trafic « suspect ».

Lorsqu'un service de type DPS est hébergé dans le « cloud », il est difficile d'identifier une attaque DDoS de façon anticipée, car un tel service n'est pas présent sur les chemins de routage (par défaut) permettant de joindre le réseau victime d'une attaque DDoS.

Pour résoudre ce problème, il a été notamment proposé de mettre en place des tunnels pour forcer le trafic (entrant ou sortant) sur un site ou un réseau destiné à être inspecté par le service DPS. Toutefois, cette approche augmente considérablement la latence observée par les utilisateurs et impose des contraintes de dimensionnement du service DPS pour être en mesure de traiter tout le trafic entrant ou sortant de tous les utilisateurs du réseau. De plus, les tunnels constituent des vecteurs d'attaque potentiels et avérés.

Lorsqu'un service de type DPS est hébergé au sein d'une infrastructure exploitée par un fournisseur d'accès, même si le service DPS est présent sur le chemin de routage du trafic entrant ou sortant d'un réseau, des difficultés peuvent survenir pour l'identification du trafic suspect. Notamment, avec l'augmentation du trafic chiffré, transporté en particulier sur UDP (par exemple, le trafic QUIC, pour « Quick UDP Internet Connection » en anglais), il est difficile de distinguer le trafic légitime du trafic suspect. La difficulté d'accéder en clair aux messages de contrôle, tels que les messages « SYN/SYN-ACK/ACK » prévus dans le protocole TCP, peut en outre rendre complexe la vérification du consentement d'un nœud du réseau à recevoir du trafic.

Afin d'aider à l'identification du trafic suspect, une architecture spécifique a été normalisée par l'IETF. Une telle architecture, appelée DOTS, permet à un nœud client, dit client DOTS, d'informer un serveur, dit serveur DOTS, qu'il a détecté une attaque DDoS et que des actions appropriées sont requises pour contrer cette attaque.

Ainsi, si un domaine client est la cible d'une attaque DDoS, un client DOTS faisant partie de ce domaine client peut envoyer un message à un serveur DOTS pour demander de l'aide. Ce dernier coordonne, avec une entité de mitigation (en anglais « mitigator »), les actions à effectuer pour que le trafic suspect, associé à l'attaque de déni de service, ne soit plus acheminé vers le domaine client, alors que le trafic légitime continue d'être acheminé normalement vers le domaine client. L'entité de mitigation peut être co-localisée avec le serveur DOTS.

Cette solution utilise deux canaux de communication entre un client DOTS et un serveur DOTS :
- un canal de signalisation DOTS (en anglais « DOTS Signal Channel »), et
- un canal de données DOTS (en anglais « DOTS Data Channel »).

Le canal de signalisation DOTS est utilisé quand une attaque DDoS est en cours. Ainsi, un client DOTS peut utiliser ce canal pour demander de l'aide auprès d'un serveur DOTS. Par exemple, un client DOTS utilise ce canal de signalisation pour envoyer une requête au serveur l'informant que le préfixe « 1.2.3.0/24 » subit une attaque DDoS, afin que le serveur puisse engager des actions pour mettre fin à l'attaque. Une telle requête est associée à un client DOTS identifié par un identifiant unique, noté par exemple CUID (« Client Unique IDentifier »).

Un serveur DOTS peut ainsi prendre les mesures adéquates pour mettre fin à une attaque DDoS d'une part si la requête émanant du client DOTS n'est pas en conflit avec d'autres demandes émanant d'autres clients DOTS du même domaine client, ou avec une règle de filtrage installée préalablement sur le serveur par un autre client DOTS du domaine client, et d'autre part si le serveur est habilité à/configuré pour honorer la dernière requête reçue. En cas de conflit, le serveur peut envoyer un message d'erreur, par exemple de type 4.09 (« Conflict »), pour informer le client DOTS.

Un tel canal de signalisation est notamment décrit dans le document « Distributed Denial-of-Service Open Threat Signaling (DOTS) Signal Channel Specification », draft-ietf-dots-signal-channel, Reddy, T. et al., janvier 2018.

Le canal de données DOTS est quant à lui utilisé lorsqu'aucune attaque DDoS n'est en cours. Par exemple, un client DOTS peut utiliser ce canal pour installer des règles de filtrage, telles que le filtrage du trafic reçu de certaines adresses ou celui destiné à un nœud donné. Par exemple, un client DOTS peut utiliser ce canal de données DOTS pour demander au serveur de bloquer tout le trafic à destination du préfixe « 1.2.3.0/24 », ou tout le trafic UDP destiné au numéro de port 443.

Le serveur DOTS peut procéder à l'installation de règles de filtrage en réponse à une demande envoyée par un client DOTS, si cette demande n'est pas en conflit avec d'autres demandes provenant d'autres clients DOTS du même domaine client ou avec une règle de filtrage existante. En cas de conflit avec d'autres règles maintenues par le serveur DOTS, le serveur peut envoyer un message d'erreur, par exemple de type 409 (« Conflict »), pour informer le client DOTS.

Un tel canal de données est notamment décrit dans le document « Distributed Denial-of-Service Open Threat Signaling (DOTS) Data Channel », draft-ietf-dots-data-channel, Boucadair M. et al., décembre 2017.

Selon la procédure décrite dans les deux documents précités, il existe un risque qu'un serveur DOTS refuse de traiter une demande de mitigation d'attaque émise par un client DOTS alors que l'attaque est réelle, ou refuse des demandes de filtrage émises par un client DOTS (un objectif des demandes de filtrage étant d'anticiper des attaques DDoS). Un tel refus peut notamment survenir lorsque ces demandes de filtrage sont en conflit avec des règles de filtrage installées par d'autres clients DOTS d'un même domaine client.

Or la suppression de ces règles par un autre nœud client du même domaine est impossible et le nœud client à l'origine de la demande de mitigation d'attaque ne dispose d'aucune information concernant l'identité du nœud client qui a installé ces règles.

Il se peut aussi que ces règles ne soient désormais plus justifiées, car périmées (en anglais « stale ») et que le client DOTS à l'origine de ces règles ne se soit pas préoccupé de les désinstaller.

Par ailleurs, des complications peuvent avoir lieu en cas de collision entre les identifiants utilisés pas les clients DOTS d'un même domaine. Par exemple, la mitigation d'une attaque DDoS peut prendre plus de temps si le serveur DOTS détecte que l'identifiant utilisé par le client DOTS à l'origine de la requête de mitigation est en conflit avec celui d'un autre client DOTS du même domaine client.

Il existe donc un besoin pour une nouvelle technique, permettant d'améliorer la fiabilité et la sécurité des échanges entre les clients et le serveur DOTS et ainsi de mettre en place une protection efficace contre les attaques informatiques, notamment les attaques par déni de service.

### 3. Exposé de l'invention

Selon au moins un mode de réalisation, l'invention concerne un procédé d'allocation d'un identifiant à un premier nœud client d'un domaine client, ledit premier nœud client étant apte à gérer le trafic associé au domaine client en vue de sa protection contre une attaque informatique, ledit procédé comprenant :
- la réception d'une requête d'allocation d'un identifiant de nœud client en provenance du premier nœud client, ladite requête comprenant au moins une information d'identification du nœud client ;
- l'obtention d'une liste d'identifiants de nœuds clients déjà alloués aux nœuds clients actifs au moins dans le domaine client ;
- l'allocation audit premier nœud client d'un identifiant de nœud client n'appartenant pas à la liste obtenue ;
- l'enregistrement dans une mémoire locale d'une association entre l'identifiant alloué et l'information d'identification du premier nœud client ;
- l'émission d'une réponse à destination du premier nœud client, comprenant l'identifiant alloué ; et
- l'émission d'une requête d'enregistrement de l'identifiant alloué au premier nœud client dans le domaine à au moins un serveur de gestion du trafic associé au domaine.

L'invention propose ainsi une gestion contrôlée des identifiants utilisés par les nœuds clients d'un domaine client pour communiquer entre eux et avec un serveur de gestion du trafic associé au domaine client. Selon ce mode de réalisation, elle garantit l'unicité de l'identifiant alloué au premier nœud lorsqu'il devient actif dans le domaine et de ce fait, permet d'éviter les conflits d'identification entre nœuds actifs.

On note que le procédé peut être mis en œuvre par un autre nœud client, bénéficiant de privilèges dans le domaine client, dit client maître, ou par une instance logicielle dédiée, dite CMI (CUID Management Instance) qui s'interface avec le nœud client maître. Il peut aussi y avoir un ou plusieurs serveurs impliqués dans la mitigation d'attaques informatiques, par exemple de déni de service, subies par un même domaine client.

Selon un mode de réalisation particulier, sur détection d'un événement relatif à une activité du domaine client, le procédé comprend une modification de l'association enregistrée dans la mémoire locale.

Ainsi, selon ce mode de réalisation, la gestion de l'identifiant alloué au premier nœud client est contrôlée pendant l'intégralité de la période de connexion du nœud au domaine client.

En particulier, l'événement détecté appartient à un groupe comprenant :
- l'inactivité du premier nœud client ;
- un comportement suspect du premier nœud client ;
- la réception d'une requête de suppression reçue du premier nœud client ; et
- un nombre de nœuds clients activés dans le domaine trop élevé par rapport à un nombre maximal autorisé.

On note que l'événement peut concerner aussi bien un changement dans l'activité du premier nœud client, ou dans la politique de sécurité ou d'administration du domaine client.

Selon un premier exemple de réalisation, la modification comprend la suppression de l'enregistrement, et le procédé comprend l'émission d'une requête d'annulation de l'enregistrement de l'identifiant alloué à destination du serveur.

Ainsi, ce premier exemple de réalisation permet la répercussion au niveau du serveur de la suppression de l'association (client, cuid). L'identifiant alloué au premier client est ainsi relâché et pourra être affecté à un autre nœud client actif.

Selon un deuxième exemple de réalisation, la modification comprend un remplacement, dans l'enregistrement de la mémoire locale, de l'information d'identification du premier client par une information d'identification d'un deuxième client du domaine.

Ainsi, ce deuxième mode de réalisation permet de faciliter le remplacement du premier nœud client par un deuxième, sans modification des actions de mitigation installées par le premier nœud client et, par conséquent, sans perturber l'exécution en cours de ces actions de mitigation. Le deuxième nœud client va reprendre le traitement des actions de mitigation précédemment mises en œuvre par le premier nœud client. Il n'est pas nécessaire, selon cet exemple, de répercuter cette modification au serveur, puisqu'il stocke déjà l'association correcte entre identifiant unique de nœud client et identifiant de domaine.

Selon un mode de réalisation particulier, la requête reçue comprenant en outre une requête d'allocation d'un attribut de délégation de gestion, ledit attribut étant destiné à être spécifié par un autre nœud client dans une requête de traitement d'une règle de gestion de trafic transmise au serveur pour déléguer au premier nœud client la gestion de ladite règle de gestion de trafic, le procédé comprend :
- l'allocation d'un attribut de délégation au premier nœud client,
- le stockage de l'attribut alloué avec l'association dans l'enregistrement, et
la réponse émise à destination du premier nœud client comprend l'attribut de délégation alloué.

Selon ce mode de réalisation, l'attribut de délégation peut être spécifié par le premier nœud client lors de l'installation d'une règle (filtrage, ACL, etc.) à l'issue de l'exécution d'une action de mitigation auprès du serveur, de façon à indiquer qu'il accorde une délégation sur l'action de mitigation. L'attribut de délégation est alors stocké par le serveur en association avec la règle installée. La connaissance de cet attribut de délégation alloué au premier nœud client peut être transmise à un autre nœud client afin de lui permettre de modifier la règle installée par le premier nœud client. Pour ce faire, le deuxième nœud client devra insérer la valeur de cet attribut de délégation dans sa requête de modification de la règle concernée et adressée au serveur.

Par exemple, la réponse comprend en outre l'attribut de délégation alloué à au moins un autre nœud client. De la sorte, plusieurs nœuds clients du domaine partagent le même attribut de délégation, ce qui leur permet d'intervenir sur une règle installée par un autre nœud client lorsque c'est nécessaire. Un avantage de cette solution est d'être simple et d'optimiser le service de protection.

Au contraire, lorsque la réponse reçue du nœud client maître ou de l'entité CMI ne comprend pas d'attribut de délégation, cela signifie que le nœud client maître ou l'entité CMI souhaite désactiver la procédure de délégation, par exemple parce qu'elle induit une charge trop importante sur certains nœuds clients du domaine.

Dans un autre mode de réalisation, l'invention concerne un procédé d'enregistrement d'un identifiant alloué à un nœud client apte à gérer le trafic associé à un domaine client en vue de sa protection contre une attaque informatique, mis en œuvre dans un serveur, le procédé comprenant :
- la réception d'une requête d'enregistrement d'un premier nœud client, ladite requête comprenant un identifiant du premier nœud client, ledit identifiant ayant été alloué au premier nœud client conformément au procédé d'allocation tel que décrit précédemment ;
- l'obtention d'un identifiant du domaine client auquel appartient le nœud client ; et
- l'enregistrement dans une mémoire de l'identifiant du premier nœud client associé à l'identifiant du domaine client obtenu.

Selon ce mode de réalisation, l'invention propose d'enregistrer au niveau du serveur une association entre l'identifiant unique alloué au nœud client et l'identifiant du domaine client, ce qui permet de sécuriser les échanges entre les nœuds clients et le serveur pour gérer le trafic associé au domaine client et de garantir l'unicité globale de l'identifiant constitué de la paire {CUID, CDID}.

En particulier, sur réception d'une requête de traitement d'une règle de gestion de trafic émise par le nœud client, ladite requête comprenant l'identifiant du premier nœud client, le procédé comprend la recherche dudit enregistrement dans une mémoire et le rejet de la requête si ledit enregistrement n'a pas été trouvé.

La détection d'un nœud client malveillant appartenant par exemple à un autre domaine client est ainsi facilitée, et il est possible de rejeter la requête si le nœud est malveillant.

Selon un mode de réalisation particulier, lorsque la requête de traitement comprend une demande de modification d'une règle de gestion de trafic installée par un deuxième nœud client, le procédé comprend :
- la vérification d'une délégation de gestion par comparaison d'un premier attribut de délégation de gestion spécifié dans la demande de modification de la règle de gestion de trafic et d'un deuxième attribut de délégation de gestion associé à la règle de gestion de trafic installée par le deuxième nœud client dans un enregistrement stocké en mémoire ;
- lorsque le premier et le deuxième attributs de délégation ont la même valeur, modification de la règle de gestion de trafic conformément à la demande.

Cette procédure de délégation permet ainsi de faire migrer la gestion d'une action de mitigation en cas d'indisponibilité du nœud client à l'origine de son installation. Elle est particulièrement intéressante, en cas d'attaque, lorsqu'un nœud client a préalablement émis une requête de mitigation au serveur qui lui a répondu qu'il existait un conflit entre sa requête et au moins une règle déjà installée par un autre nœud client suite à l'exécution d'une action de mitigation. Avec l'invention, le nœud client qui détecte l'attaque peut mettre à profit la procédure de délégation pour demander au serveur de modifier la règle de sorte qu'elle ne fasse plus obstacle à la mitigation de l'attaque en cours. La fiabilité du service de mitigation d'attaques est donc accrue.

En particulier, sur réception d'une demande de suppression d'enregistrement de l'identifiant du premier nœud client, le procédé comprend la suppression dudit enregistrement et la suppression des règles de gestion de trafic installées par le premier nœud client.

Selon un mode de réalisation particulier, le procédé d'enregistrement d'un identifiant comprend la notification des autres nœuds clients actifs dans le domaine client, préalablement à ladite suppression des règles de gestion de trafic installées par le premier nœud client.

Il est ainsi possible d'informer les autres nœuds clients de la suppression imminente de règles installées par un client pour la mitigation d'une attaque, est de leur donner la possibilité de demander au serveur de les migrer à leur profit.

Selon un autre mode de réalisation, l'invention concerne un dispositif d'allocation d'un identifiant à un premier nœud client apte à gérer le trafic associé à un domaine client en vue de sa protection contre une attaque informatique, ledit dispositif comprenant au moins une machine de calcul programmable ou une machine de calcul dédiée et configurée pour mettre en œuvre :
- la réception d'une requête d'allocation d'un identifiant de nœud client en provenance du premier nœud client, ladite requête comprenant au moins une information d'identification du nœud client ;
- l'obtention d'une liste d'identifiants de nœuds clients déjà alloués à des nœuds clients actifs au moins dans le domaine client ;
- l'allocation au premier nœud client d'un identifiant de nœud client n'appartenant pas à la liste obtenue ;
- l'enregistrement dans une mémoire locale d'une association entre l'identifiant alloué et l'information d'identification du premier nœud client ;
- l'émission d'une réponse à destination du premier nœud client, comprenant l'identifiant alloué ; et
- l'émission d'une requête d'enregistrement de l'identifiant alloué au premier nœud client dans le domaine à au moins un serveur de gestion du trafic associé au domaine.

D'autres modes de réalisation concernent un nœud client et un serveur correspondants.

Dans un autre mode de réalisation, l'invention concerne un ou plusieurs programmes d'ordinateur comportant des instructions pour la mise en œuvre d'un procédé selon au moins un mode de réalisation de l'invention, lorsque ce ou ces programmes est/sont exécuté(s) par un processeur.

Dans encore un autre mode de réalisation, l'invention concerne un ou plusieurs supports d'informations, inamovibles, ou partiellement ou totalement amovibles, lisibles par un ordinateur, et comportant des instructions d'un ou plusieurs programmes d'ordinateur pour l'exécution d'un procédé selon au moins un mode de réalisation de l'invention.

Les procédés selon l'invention peuvent donc être mis en œuvre de diverses manières, notamment sous forme câblée et/ou sous forme logicielle.

### 4. Liste des figures

D'autres buts, caractéristiques et avantages de l'invention apparaîtront plus clairement à la lecture de la description suivante, donnée à titre de simple exemple illustratif, et non limitatif, en relation avec les figures, parmi lesquelles :
- la figure 1 illustre un exemple de réseau de communication mettant en œuvre un procédé d'allocation d'un identifiant d'un nœud client et un procédé d'enregistrement d'un identifiant, selon un mode de réalisation de l'invention ;
- la figure 2 présente les principales étapes du procédé d'allocation d'un identifiant selon un mode de réalisation de l'invention ;
- la figure 3 présente les principales étapes du procédé d'enregistrement d'un identifiant selon un mode de réalisation de l'invention ;
- les figures 4A et 4B illustrent des exemples de messages échangés entre un premier nœud client, un client maître et un serveur pour l'allocation d'un identifiant au premier client d'un domaine client et son enregistrement selon un mode de réalisation de l'invention ;
- les figures 5A et 5B illustrent des exemples d'application de l'invention pour fiabiliser les échanges entre les nœuds clients et le serveur ;
- les figures 6A à 6D illustrent des exemples de messages échangés entre le premier nœud client, le client maître et le serveur pour supprimer l'identifiant alloué au premier nœud client selon un mode de réalisation de l'invention ;
- La figure 7 détaille les étapes mises en œuvre par le serveur pour traiter une requête de modification par un premier nœud client d'une action de gestion installée par un deuxième nœud client, selon un mode de réalisation de l'invention ;
- Les figures 8A à 8B illustrent la résolution d'un conflit entre actions de gestion de trafic selon un mode de réalisation de l'invention ;
- Les figures 9A à 9C illustrent des exemples de messages échangés pour la mise en place d'une procédure de délégation entre nœuds clients selon un mode de réalisation de l'invention ; et
- La figure 10 illustre de façon schématique la structure matérielle d'un nœud client et d'un serveur selon un mode de réalisation de l'invention.

### 5. Description détaillée de modes de réalisation de l'invention

Le principe général de l'invention repose sur l'allocation d'un identifiant unique à un nœud client faisant partie d'un domaine client, mais également sur l'enregistrement de cet identifiant en association avec un identifiant du domaine client, et sur l'utilisation de cet identifiant unique pour rendre plus efficace et plus fiable la protection contre des attaques de déni de service au sein du domaine.

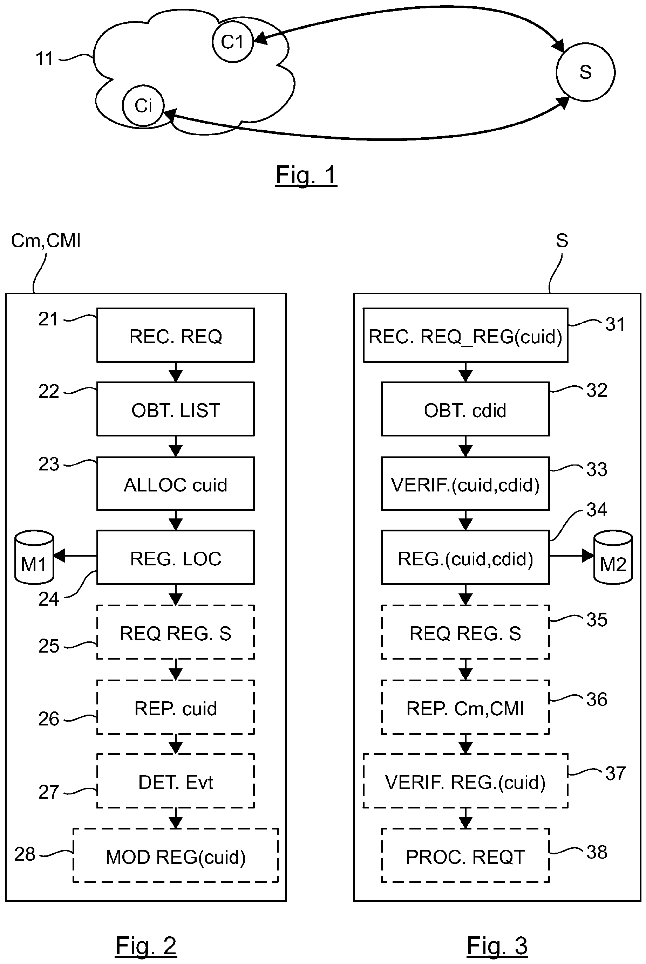

On présente, en relation avec la figure 1, différents équipements d'un réseau en charge de la protection du réseau et des terminaux qui y sont connectés contre des attaques informatiques, et mettant en œuvre un procédé d'allocation d'un identifiant selon un mode de réalisation de l'invention.

Par exemple, le domaine client 11 comprend une ou plusieurs machines, encore appelées nœuds. On entend ici par « domaine » un ensemble de machines ou nœuds placés sous la responsabilité d'une même entité. On considère par exemple plusieurs nœuds clients C1, C2, Cm appartenant au domaine client 11, communiquant avec un serveur S 12.

Selon l'exemple illustré, le serveur 12 n'appartient pas au domaine client 11. Selon un autre exemple non illustré, le serveur 12 peut appartenir au domaine client 11.

Dans la suite de la description, on considère le cas d'une architecture de type DOTS, selon laquelle les nœuds clients C1, C2 et Cm 114 sont des clients DOTS et le serveur S est un serveur DOTS. Les nœuds clients C1, C2 et Cm et le serveur S peuvent ainsi communiquer via les canaux de signalisation et de données DOTS définis en relation avec l'art antérieur, pour informer le serveur qu'une attaque DDoS a été détectée et que des actions appropriées sont requises.

### 5.1. Rappels sur l'architecture DOTS

Une requête DOTS peut être, par exemple :
- un message de gestion d'alias, par exemple destiné à associer un identifiant avec une ou plusieurs ressources réseau située(s) dans le domaine client,
- un message de signalisation pour solliciter la mitigation d'une attaque de déni de service auprès d'un serveur DOTS, le serveur pouvant, sur réception d'un tel message, déclencher les actions nécessaires pour mettre fin à l'attaque, ou
- un message de gestion de règles de gestion de trafic, par exemple de filtrage, comprenant une requête auprès d'un serveur DOTS pour qu'il installe (ou fasse installer), modifie ou encore supprime une liste de contrôle d'accès (ACL pour « Access Control List ») pour la mitigation d'une attaque. Dans la suite, on désignera par « requête de traitement» une demande d'installation d'une ou plusieurs règles de filtrage explicites, d'une liste de contrôle d'accès, et plus généralement de toute action qu'un nœud client DOTS peut solliciter du serveur pour la mitigation d'une attaque et plus généralement, l'application d'une politique de sécurité ciblant le domaine qui héberge le client DOTS.

Une requête DOTS peut être envoyée d'un client DOTS, appartenant à un domaine client DOTS, à un serveur DOTS ou à une pluralité de serveurs DOTS. Un domaine DOTS peut accueillir un ou plusieurs clients DOTS. En d'autres termes, plusieurs nœuds client d'un domaine client peuvent disposer de fonctions DOTS.

Les communications DOTS entre un domaine client et un domaine serveur peuvent être directes, ou établies via des passerelles DOTS (en anglais « DOTS gateways »), non représentées. Ces passerelles peuvent être hébergées au sein du domaine client, du domaine serveur, ou des deux. En d'autres termes, un nœud client du domaine client peut communiquer directement avec le serveur, ou transmettre une requête à une passerelle du domaine client qui communique directement avec le serveur ou avec une passerelle du domaine serveur, ou transmettre une requête à une passerelle du domaine serveur qui communique avec le serveur.

Une passerelle DOTS localisée dans un domaine client est considérée par un serveur DOTS comme un client DOTS.

Une passerelle DOTS localisée dans un domaine serveur est considérée par un client DOTS comme un serveur DOTS. En cas de présence d'une passerelle DOTS dans un domaine serveur, l'authentification des clients DOTS peut être confiée à la passerelle DOTS du domaine serveur. Un serveur DOTS peut être configuré avec la liste des passerelles DOTS actives au sein de son domaine et le serveur peut déléguer certaines de ses fonctions à ces passerelles de confiance. En particulier, le serveur peut utiliser en toute sécurité les informations fournies par une passerelle figurant dans une liste déclarée auprès du serveur et maintenue par celui-ci, moyennant une procédure d'authentification *ad hoc* (par exemple, configuration explicite de la liste par l'administrateur habilité du serveur, récupération de la liste auprès d'un serveur d'authentification tel qu'un serveur AAA (pour « Authentication, Authorization and Accounting »), etc.).

Les modes de réalisation présentés ci-après peuvent être mis en œuvre quelle que soit la configuration de l'architecture DOTS (un ou plusieurs clients DOTS dans un domaine client, pas de passerelle DOTS, une ou plusieurs passerelles DOTS dans le domaine client ou dans le domaine serveur, domaine client distinct du domaine serveur, etc.).

L'établissement d'une session DOTS sécurisée peut se dérouler conformément à la procédure décrite dans le document « *Distributed Denial-of-Service Open Threat Signaling (DOTS) Signal Channel Specification* » précité.

Dans la suite, on suppose que les agents DOTS (client(s), serveur(s)) s'authentifient mutuellement. Il existe donc un canal de communication sécurisé, par exemple de type DTLS/TLS (pour « (Datagram) Transport Layer Security »), entre un client DOTS et un serveur DOTS.

Ainsi, les messages reçus d'un autre serveur usurpant l'adresse IP du serveur légitime peuvent être rejetés par un client DOTS. De la même manière, les demandes des clients DOTS non-autorisés à accéder au service de mitigation sont ignorées par le serveur DOTS. On suppose dans la suite que cette procédure est mise en place par les agents DOTS.

Les détails des échanges DTLS/TLS et ceux concernant la gestion des clés de sécurité pour l'authentification mutuelle des agents DOTS, ne font pas l'objet de la présente invention et ne sont pas détaillés ici.

### 5.2 Exemples d'application dans le domaine des services de mitigation (DPS)

La figure 2 illustre les principales étapes du procédé d'allocation d'un identifiant à un premier nœud client C1 selon un mode de réalisation de l'invention. Ce procédé peut être mis en œuvre par un autre nœud client du domaine client, bénéficiant de privilèges auprès du serveur S, dit client maître Cm, ou par une nouvelle instance logicielle dédiée, dite CMI (pour « CUID Management Instance », en anglais) qui s'interface avec un nœud client maître Cl. Dans la suite, on suppose que le procédé d'allocation d'un identifiant est mis en œuvre par le client maître Cm du domaine client 11. Cependant, le même procédé s'applique quand cette fonction est remplie par ladite entité dédiée CMI.

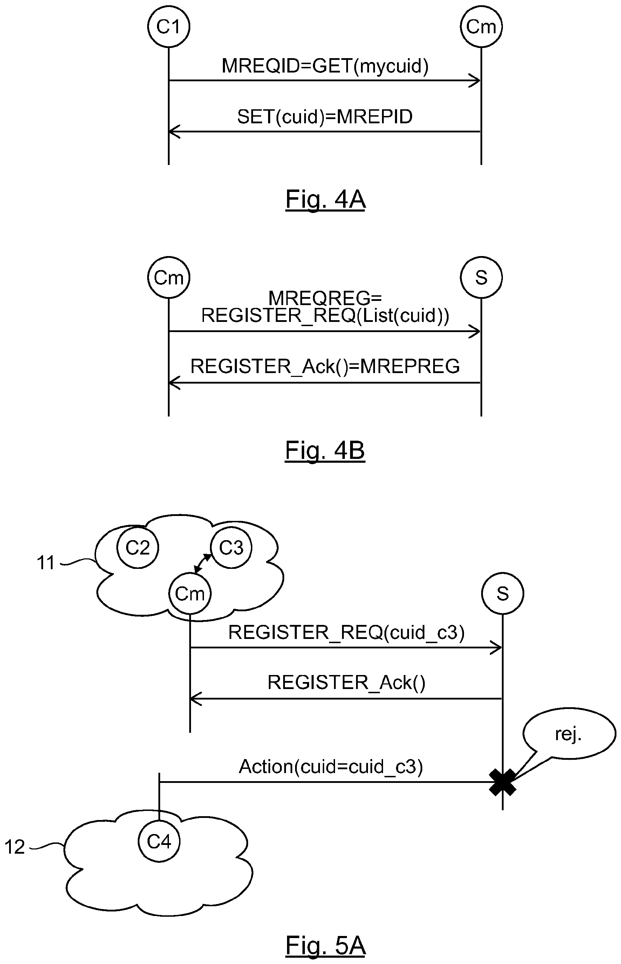

Au démarrage du client DOTS C1, celui-ci contacte son client maître Cm ou l'instance CMI pour demander en 21 l'allocation d'un identifiant de client DOTS ou cuid. Pour ce faire, le client DOTS C1 émet un message de requête d'allocation MREQID ou GET() à destination du client maître Cm, comme illustré par la Figure 4A. Dès réception du message MREQID ou GET() par le client maître Cm DOTS (ou l'instance CMI), ce dernier vérifie que ce client C1 est autorisé à invoquer le service DOTS. Le cas échéant, le client maître Cm obtient en 22 une liste des identifiants actuellement utilisés dans le domaine, par exemple en consultant une table stockée en mémoire, et choisit en 23 un identifiant cuid_c1 qui ne fait pas partie de cette liste. De la sorte, le client DOTS Cm (ou l'instance CMI) s'assure par défaut que deux clients du domaine client n'utilisent pas le même identifiant 'cuid'. On notera que cette contrainte peut être relâchée pendant les phases de sécurisation ou de remplacement d'un client DOTS par un autre. Une fois l'identifiant cuid_c1 choisi, le client maître Cm enregistre en 24 la paire formée par l'identifiant unique alloué et l'identifiant du client C1 en mémoire, par exemple une mémoire locale. Ensuite, et afin d'améliorer la robustesse du service DOTS, le client maître DOTS Cm contacte en 25 le serveur S en 27Cm pour enregistrer le nouvel identifiant activé au sein du domaine client DOTS pour le client C1. Comme illustré par la Figure 4B, il le fait par exemple à l'aide d'un message de requête d'enregistrement MREQREG() ou REGISTER_REQ(). Ce message peut inclure les identifiant(s) DOTS cuid du client C1 seul ou de plusieurs clients.). Sur réception d'un message de confirmation MREPREG() ou REGISTER_ACK() du serveur S, il envoie en 26 au client C1 un message d'acquittement MREPID ou SET(cuid_c1) comprenant l'identifiant cuid_c1 qu'il lui a alloué, comme illustré par la Figure 4A. Sur réception d'une réponse de rejet de la part du serveur S, le client Cm peut réitérer le processus afin de réallouer un nouvel identifiant au client C1 et redemander l'enregistrement du nouvel identifiant cuid_c1 au serveur S.

Optionnellement, sur détection d'un événement intervenant dans le domaine client, comme l'inactivité du nœud client C1, ou sa déconnexion ou encore un changement dans la politique de sécurité du domaine client en 27, il modifie en 28 au moins localement l'enregistrement de l'identifiant cuid_c1.

En relation avec la figure 3, on décrit maintenant les étapes d'un procédé de d'enregistrement d'un identifiant alloué à un nœud client, mis en œuvre par le serveur S selon un mode de réalisation de l'invention. Sur réception en 31 d'une requête d'enregistrement MREQREG() ou REGISTER_REQ d'un identifiant cuid_c1 pour le client C1 du domaine client 11 en provenance du client maître Cm, comme illustré par la Figure 4B, le serveur S procède aux vérifications de sécurité (non représentées) déjà évoquées. En cas de succès, il obtient en 32 un identifiant 'cdid' (pour « Client Domain IDentifier », en anglais) du domaine client 11 auquel est rattaché le client C1. A titre d'exemple, un serveur DOTS identifie les clients DOTS appartenant à un même domaine par l'attribut cdid. D'autres mécanismes pour l'identification du domaine client peuvent être supportés par le serveur. L'identifiant de domaine peut être calculé localement par le serveur ou communiqué par une autre entité de confiance (typiquement, un relais DOTS de son domaine serveur), ou les deux. Aucune hypothèse n'est faite quant à la structure du cdid. Il vérifie ensuite en 33 si une association entre cet identifiant de client cuid_c1 et cet identifiant de domaine 'cdid' est déjà stockée en mémoire. S'il en trouve une, il rejette la requête d'enregistrement en 35 en renvoyant au client maître une réponse de rejet MREPREQ(rej). S'il n'en trouve pas, il traite la requête d'enregistrement en 34 en stockant la paire (cuid, cdid) du client C1 en mémoire M2. Il acquitte ensuite la requête d'enregistrement avec un message MREPREG(ack) ou REGISTER-ACK(), comme illustré par la Figure 4B.

Optionnellement, sur réception en 36 d'une requête de traitement MREQT pour la mise en œuvre d'une solution de mitigation, telle que l'installation d'une règle de gestion de trafic du type filtrage du trafic Rk, cette requête émanant d'un client identifié par l'identifiant cuid_c1, le serveur vérifie en 37 que l'identifiant cuid_c1 est valablement enregistré dans sa mémoire en association avec l'identifiant du domaine client d'où provient la requête. En cas de succès, il traite la requête en 38, sinon il la rejette. On note que la procédure de vérification selon l'invention mise en œuvre par le serveur DOTS pour traiter une requête DOTS émanant d'un client DOTS rend le service plus fiable même en cas de vol des identités de sécurité par une entité malveillante. On présente en relation avec la Table 1 un exemple d'extrait d'une liste de clients DOTS telle que maintenue par un client DOTS maître Cm. La table indique trois clients DOTS actifs pour ce domaine. L'invention ne suppose pas de structure particulière pour les tables maintenues par l'instance CMI/client maître DOTS.

**Table 1**

| **Client Identifier (cuid)** | **Client Identity** |
|---|---|
| cuid_ex1 | Security Credentials |
| cuid_ex2 | Security Credentials |
| cuid_ex3 | Security Credentials |

On notera que dans le cas où le procédé selon l'invention est mis en œuvre par une entité logicielle CMI, les informations concernant l'allocation de l'identifiant du client DOTS sont communiquées par l'instance CMI au client maître DOTS Cm.

On présente ci-après un exemple d'extrait d'une requête d'enregistrement MREPREG transmise par le client maître Cm au serveur S. Dans cet exemple, la requête PUT est relayée par un relais DOTS du domaine serveur. Le nœud client relais insère l'information "cdid=here.example" pour communiquer au serveur l'identité du domaine du client DOTS. Cette information est notamment exploitée par le serveur pour l'application de politiques telles que l'application de quota ou la limitation du nombre de requêtes par domaine.

| |
|---|
| ```
     Header: PUT (Code=0.03)
     Uri-Host: "www.example.com"
     Uri-Path: ".well-known"
     Uri-Path: "dots"
     Uri-Path: "v1"
     Uri-Path: "mitigate"
     Uri-Path: "cdid= here.example"
``` |
| ```
     Uri-Path: "cuid= cuid_ex1"
     Uri-Path: "mid=57956"
``` |

On présente aussi, en relation avec la Table 2, un exemple d'extrait d'une liste de clients telle que maintenue par le serveur S. La table indique 5 clients DOTS actifs dont 3 appartenant au domaine « here.example » du client maître Cm.

**Table 2**

| **cuid / « Client Identifier »** | **Identité du client / « Client Identity »** | **Domaine client / « Client Domain »** | **...** |
|---|---|---|---|
| cuid_ex1 | Security Credentials | here.example | **...** |
| cuid_ex2 | Security Credentials | here.example | **...** |
| cuid_ex3 | Security Credentials | here.example | **...** |
| cuid_exi | Security Credentials | there.example | **...** |
| cuid_exj | Security Credentials | there.example | **...** |

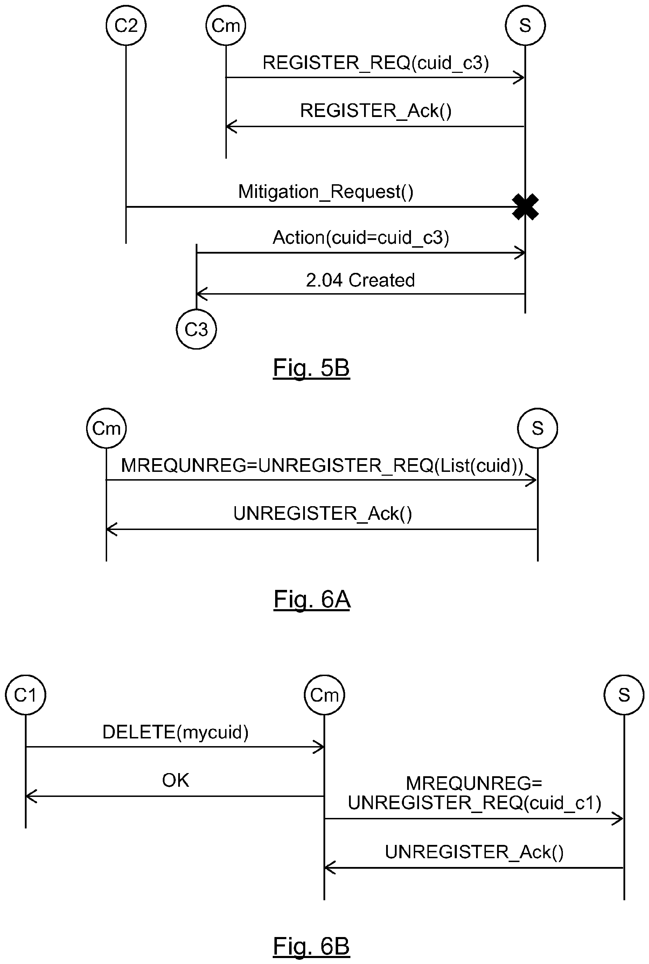

Pour illustrer les avantages du procédé d'allocation d'identifiant unique selon l'invention, on considère les exemples de situation des Figures 5A et 5B.

Dans ces deux exemples, le client maître C1 procède d'abord à l'enregistrement auprès du serveur S de l'identifiant cuid_c3 qu'il a alloué au client C3. Comme précédemment décrit, le serveur S, sur réception de la requête REGISTER_REQ(cuid_c3), vérifie que cet identifiant est bien unique dans le domaine client 11 identifié par son identifiant unique cdid = « here.example » et, si c'est le cas, stocke en mémoire l'association (cuid_c3, cdid).

En relation avec la Figure 5A, si un client DOTS malveillant C4 appartenant à un autre domaine 12 contacte le serveur S, en demandant la mise en œuvre d'une action de gestion au nom du client C3, c'est-à-dire en utilisant son identifiant cuid_c3, le serveur détecte que l'association (cuid_c3, cdid) est erronée et il rejette la requête.

En relation avec la Figure 5B, si un client DOTS malveillant C2 faisant partie du même domaine 11 que le client C3 et que le client maître Cm, contacte le serveur S pour une demande de mitigation d'une attaque, sa requête sera rejetée par le serveur S, parce que ce client C2 n'est pas enregistré valablement auprès de lui.

En relation avec les Figures 6A à 6C, on détaille maintenant les étapes 27 de détection d'un événement de gestion du trafic associé au domaine client et 28 de modification de l'association d'identifiants enregistrée dans la mémoire locale du client maître ou de l'entité CMI, selon un premier mode de réalisation de l'invention.

On suppose que l'événement détecté en 27 est un événement relatif à un changement dans l'activité des nœuds clients enregistrés dans le domaine ou dans la politique de sécurité appliquée au sein du domaine. Selon l'invention, un nœud client maître Cm exploite les identifiants uniques pour réagir à cet événement. Il s'agit par exemple de :
- l'inactivité d'un nœud client pendant une période prédéterminée ;
- la décision de l'administrateur du domaine client de réduire le nombre de clients DOTS activés au sein du domaine ;
- le comportement suspect d'un nœud client DOTS ;
- la demande explicite de suppression d'enregistrement en provenance d'un nœud client DOTS du domaine client 11.

Suite à cette détection, le client maître Cm peut décider de supprimer l'enregistrement d'un ou plusieurs nœuds clients auprès du serveur S.

Pour ce faire, comme illustré par la Figure 6A, il envoie un message de requête de suppression d'enregistrement MREQUNREG ou UNREGISTER_REQ(). Le message de suppression de l'enregistrement peut inclure un ou plusieurs identifiants de clients DOTS d'un domaine client. Dès réception de ce message, le serveur DOTS S procède à la suppression des clients listés dans ses tables (après les vérifications de sécurité d'usage).

En relation avec la Figure 6B, l'événement détecté par le client maître Cm est la réception d'une demande explicite de suppression d'enregistrement de la part d'un nœud client C1 du domaine client. Sur réception de la requête MREQSUP() ou DELETE(cuid_c1), le client maître Cm procède à la modification de l'enregistrement de l'identifiant du client C1.

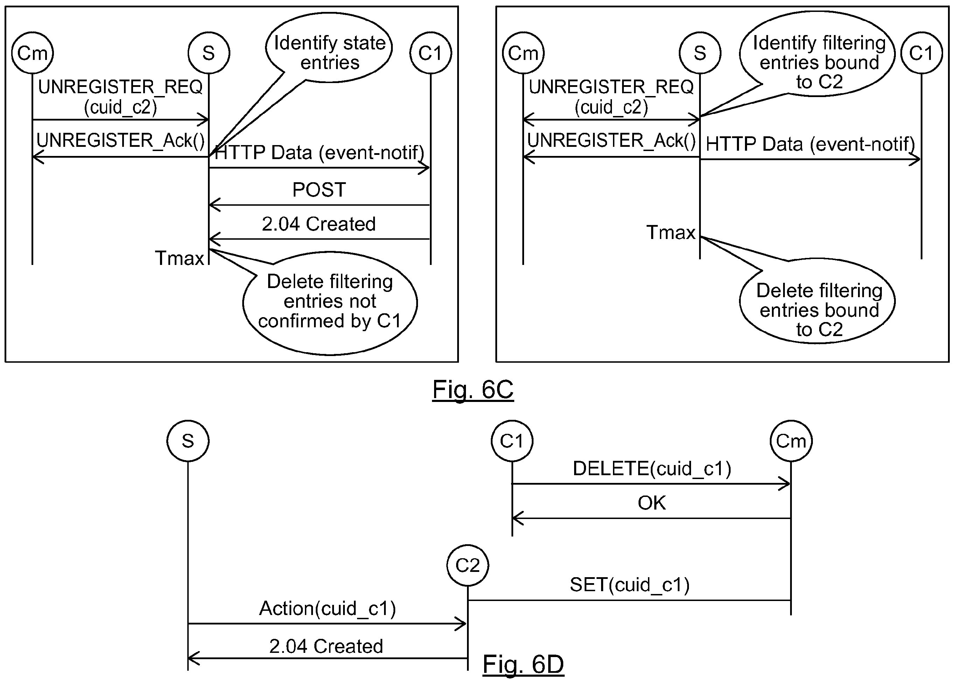

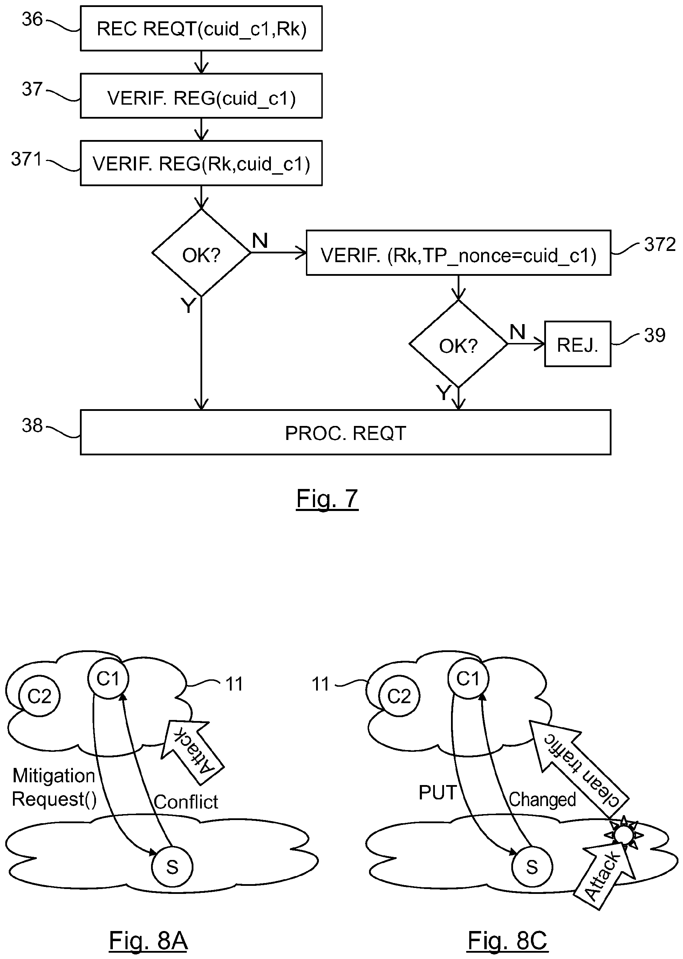

Deux options sont envisagées :
- Selon une première option, illustrée par la Figure 6B, le client maître C1 acquitte la requête du client C1 par un message de réponse MREPSUP(ack) et transmet une requête de suppression d'enregistrement MREQUNREG() du client C1 au serveur S. Ce dernier supprime l'association (cuid_c1, cdid) de sa table et répond au client maître Cm par un message d'acquittement. L'identifiant cuid_c1 est ainsi libéré au niveau du serveur S, lequel va ensuite supprimer les actions installées avec cet identifiant.
   Selon une variante illustrée par la Figure 6C, avant de supprimer les règles de gestion de trafic installées avec l'identifiant qui vient d'être libéré, le serveur DOTS S informe les autres clients du domaine de l'existence de ces règles, de sorte qu'ils puissent les réinstaller.
   Dans un exemple de réalisation, on suppose que les agents DOTS (clients et serveurs) supportent le mécanisme « RESTCONF and HTTP Transport for Event Notifications », tel que spécifié dans le document «RESTCONF Transport for Event Notifications, draft-ietf-netconf-restconf-notif, E. Voit et al., sept. 2018 ».
   Quand le client C2 se déconnecte ou quand le serveur détecte une inactivité du client C2 pendant une période donnée, celui-ci identifie les filtres associés à ce client C2, et notifie ensuite les autres nœuds clients du même domaine client tels que C1 de son intention de supprimer les règles de gestion de trafic associées au client C2.
   Sur réception de cette notification, le client C1 peut décider de prendre la responsabilité de certaines règles initialement associées au client C2. Pour ce faire, il transmet une requête de type POST au serveur S pour lui demander de migrer vers son nom certaines règles du client C2. Le serveur S procède à la migration de ces règles, et envoie un message d'acquittement de type « 204 created » au client C1 (i.e., l'identifiant du nœud client C1 sera maintenu par le serveur comme étant responsable de la gestion de ces règles).
   Si aucune réponse n'est reçue des autres clients du domaine client, la suppression des filtres est confirmée par le serveur S.
- Selon une deuxième option, illustrée par la Figure 6D, le client maître Cm acquitte la requête du client C1 par un message de réponse MREPSUP(ack). Pour éviter de perturber le fonctionnement du domaine DOTS 11, il ne demande pas au serveur S de supprimer l'enregistrement de l'identifiant cuid_c1 du client C1, mais il réalloue cet identifiant à un autre client C2 du domaine 11. De la sorte, il remplace le client C1 par un autre client du domaine sans affecter l'état maintenu par le serveur S.
   Lorsque le client C2 émet une requête de traitement, comme par exemple l'installation d'une règle de filtrage auprès du serveur S, en s'identifiant avec l'identifiant cuid_c1, le serveur peut accepter sa requête car le client C2 est valablement identifié.
   Ainsi, l'allocation d'un identifiant unique à chaque client d'un domaine client réalisée par le procédé selon l'invention fiabilise les échanges entre les agents DOTS et rend plus robuste la protection, par le client maître Cm situé dans le domaine client 11, du domaine client contre les attaques, et cela même en cas de déconnexion de certains nœuds clients d'un même domaine client.
   En relation avec la Figure 7, on détaille maintenant les étapes 36 à 38 de réception et de traitement d'une requête de modification d'une règle de gestion de trafic mise en œuvre par le serveur S selon un deuxième mode de réalisation de l'invention.
   Le serveur S reçoit en 36 une requête de traitement d'une règle Rk en provenance du client C1.
   Il vérifie en 37 que l'identifiant cuid_c1 est bien enregistré en association avec l'identifiant du domaine client cdid. Le cas échéant, il recherche en 371 un enregistrement associant l'identifiant cuid_c1 à la règle Rk identifiée par l'attribut rk. Si c'est le cas, le client C1 est à l'origine de l'installation de la règle Rk qu'il souhaite modifier. Le serveur S procède à la modification demandée en 38.
   Sinon, il réalise en 372 une vérification supplémentaire, qui consiste à chercher un enregistrement associant à la règle Rk l'attribut de délégation « THIRD_PARTY_NONCE » du client C1. S'il le trouve, le serveur S considère que le client C1 bénéficie d'une délégation de la part du client C2 pour modifier la règle Rk et il procède à la modification demandée en 38.
   Concrètement, ce nouvel attribut « THIRD_PARTY_NONCE » est renseigné par le client DOTS C2 lors de la création de la règle Rk auprès du serveur S. Cet attribut inclut un identifiant unique, tel que l'identifiant cuid_c1 du client C1.
   Cette procédure de délégation permet à un nœud client du domaine client de modifier des actions installées par un autre client de ce domaine client, telles que par exemple des règles de filtrage de trafic périmées ou en conflit avec l'installation d'autres règles de filtrage, par exemple pour la mise en place d'une solution de mitigation contre une attaque DDoS.
   On détaille maintenant la mise en place d'une procédure de délégation selon l'invention en considérant l'exemple des nœuds clients C1 et C2 du domaine client 11. On suppose que C1 et C2 activent la procédure de délégation des opérations DOTS pour fiabiliser le service en cas d'indisponibilité de l'un d'eux, en cas de conflit, etc. La procédure de délégation peut être activée de plusieurs manières :
      - selon une première option, la délégation est activée seulement par le client C1 au profit du client C2. Le client C2 ne désigne pas le client C1 comme bénéficiaire d'une délégation ;
      - selon une deuxième option, la délégation est activée par les deux clients : C1 délègue à C2 et vice versa. Deux variantes sont envisagées :
         ∘ la même valeur de l'attribut THIRD_PARTY_NONCE est utilisée par les deux clients.
         ∘ des valeurs distinctes sont utilisées par chacun des clients.

A des fins d'illustration, on présente ci-après un exemple de requête d'installation d'une action de gestion « my_acl », pour laquelle le nœud client C2 identifié par l'identifiant cuid_c2, précise au serveur qu'il supporte la délégation en indiquant la valeur « 263afd79-835c-4ee7-9535-df245cf28d9a » pour l'attribut THIRD_PARTY_NONCE dans sa requête.

| |
|---|
| ```
    POST /restconf/data/ietf-dots-data-channel:dots-data\
       /dots-client=cuid_c2 HTTP/1.1
    Host: {host}:{port}
    Content-Type: application/yang-data+json
    {
     "ietf-dots-data-channel:access-lists": {
      "THIRD_PARTY_NONCE": 263afd79-835c-4ee7-9535-df245cf28d9a,
      "acl": [
       { "name": "my-acl",
        "type": "ipv4-acl-type",
        "aces": {
         "ace": [
          { "name": "my-example",
           "matches": {
             "I3": {
              "ipv4" {
               "destination-ipv4-network": "1.2.3.0/24"
              }
             }
           },
           "actions": {
             "forwarding": "accept"
           }
          }
         ]
        }
       }
      ]
     }
 }
``` |

On suppose maintenant que le nœud client C1 détecte que la machine dont l'adresse IP est « 1.2.3.1/32 » subit une attaque, comme illustré par la Figure 8A.

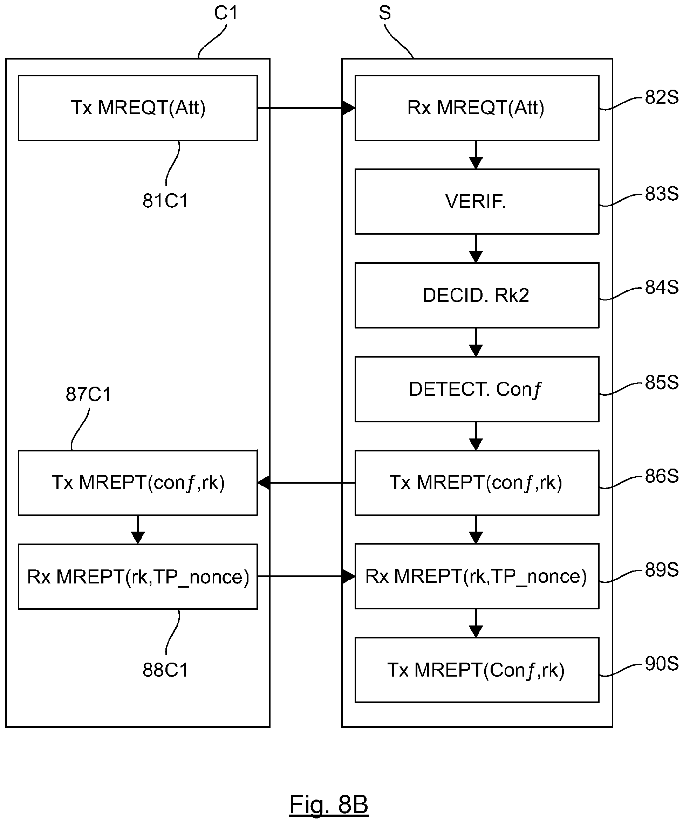

En relation avec la Figure 8B, le nœud client C1 sollicite le serveur S pour qu'il mette en place une solution de mitigation de cette attaque en envoyant en 81C1 le message suivant :

| |
|---|
| ```
     Header: PUT (Code=0.03)
     Uri-Host: "www.example.com"
     Uri-Path: ".well-known"
     Uri-Path: "dots"
     Uri-Path: "v1"
``` |
| ```
     Uri-Path: "mitigate"
     Uri-Path: "cuid=cuid_c1"
     Uri-Path: "mid=57956"
     Content-Format: "application/cbor"
     {
      "ietf-dots-signal-channel:mitigation-scope": {
       "scope": [
        {
         "target-prefix": [
           "1.2.3.1/32",
         ], "target-port-range": [
          {
           "lower-port": 80
          }
          ],
          "target-protocol": [
           6
        ] }
      ] }
     }
``` |

Sur réception en 82S de cette requête, le serveur S procède en 83S aux vérifications de sécurité et d'enregistrement du nœud client C1 déjà décrites, puis décide en 84S d'une action à mettre en place. Il s'agit par exemple d'installer une nouvelle règle de filtrage Rk2. Lorsqu'il tente d'installer cette règle, il détecte en 85S un conflit avec la règle de filtrage Rk = « my_acl » déjà installée par le nœud client C2.

Il envoie en 86S un message d'erreur 4.09 (Conflict) au nœud client C1 pour l'informer de l'existence de ce conflit avec la règle de filtrage Rk = "my-acl".

Le nœud client C1 reçoit ce message d'erreur en 87C1. Contrairement à l'état de l'art, le nœud client C1 renvoie en 88C1 une requête de modification de la règle de filtrage Rk au serveur S1 pour résoudre le conflit. Dans cet exemple, on suppose que le nœud client C1 ajoute une nouvelle entrée à la règle existante « my-acl » pour bloquer seulement le trafic destiné à l'adresse « 1.2.3.1/32 ». Par exemple, la requête de modification de Rk qu'il adresse au serveur S1 prend la forme suivante :

| |
|---|
| ```
    PUT /restconf/data/ietf-dots-data-channel:dots-data\
       /dots-client=cuid_c1 HTTP/1.1
    Host: {host}:{port}
    Content-Type: application/yang-data+json
    {
     "ietf-dots-data-channel:access-lists": {
      "THIRD_PARTY_NONCE": 263afd79-835c-4ee7-9535-df245cf28d9a,
      "acl": [
``` |
| ```
       { "name": "my-acl",
        "type": "ipv4-acl-type",
        "aces": {
         "ace": [
          { "name": "my-example_delegate",
           "matches": {
             "I3": {
              "ipv4" {
               "destination-ipv4-network": "1.2.3.1/32"
              }
             }
           },
           "actions": {
             "forwarding": "drop"
           }
          }
         ]
        }
       }
      ]
     }
 }
``` |

On note qu'elle spécifie la valeur de l'attribut THIRD_PARTY_NONCE. Dès réception de ce message par le serveur DOTS S en 89S, ce dernier vérifie que la valeur de l'attribut "THIRD_PARTY_NONCE" (263afd79-835c-4ee7-9535-df245cf28d9a) est identique à celle indiquée par le client C2 lors de la création de la règle de filtrage Rk= "my-acl" et que les deux clients C1 et C2 appartiennent au même domaine client DOTS 11. Suite à cette vérification, le serveur DOTS S décide de modifier le filtre comme demandé par le nœud client C1. Le trafic DDoS est alors bloqué comme illustré par la Figure 8C. L'invention permet ainsi de résoudre le conflit sans solliciter le nœud client C2.

Selon un troisième mode de réalisation de l'invention, la valeur de l'attribut "THIRD_PARTY_NONCE" est allouée par l'instance CMI/client maître Cm, en même temps que l'identifiant 'cuid'. La valeur de l'attribut de délégation peut être obtenue par configuration statique ou dynamique, par exemple, via le protocole DHCP.

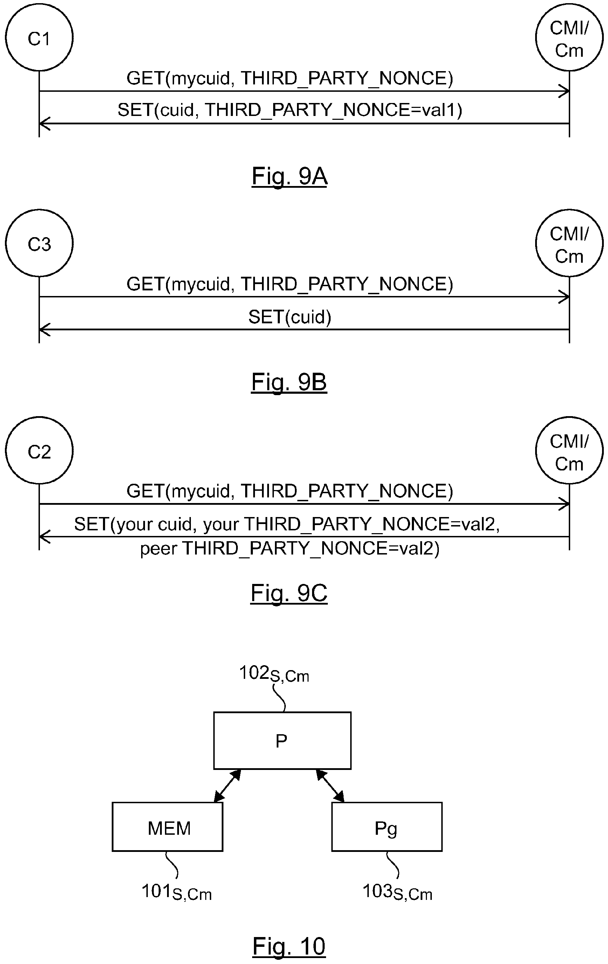

En relation avec la Figure 9A, le nœud client C1 transmet une requête d'allocation MREQID() ou GET(cuid, THIRD_PARTY_NONCE) d'un identifiant 'cuid_c1' et d'un attribut de délégation.

Avantageusement, l'instance CMI ou le nœud client maître Cm peut désactiver cette procédure de délégation en ne retournant aucune valeur d'attribut de délégation au client C1 comme illustré par la Figure 9B. Concrètement, l'absence de l'attribut THIRD_PARTY_NONCE dans la réponse reçue du CMI est une indication explicite pour informer le nœud client C1 que la procédure de délégation DOTS est désactivée.

En effet, la procédure de délégation peut induire une surcharge de calcul pour le nœud client qui prend le relais d'un autre nœud client pour la gestion de ses actions en cours. Si la charge dudit nœud relais atteint un certain seuil, par exemple 80% de l'unité centrale de traitement ou CPU (pour « Central Processing Unit », en anglais), la procédure de délégation pourrait alors être désactivée. L'entité en charge de l'activation de la procédure de délégation peut notamment être informée d'un dépassement de seuil par des moyens de notification classiques tels qu'un « trap SNMP ».

Selon une variante de réalisation, illustrée par la Figure 9C, le nœud client maître indique dans sa réponse au nœud client C1, non seulement la valeur de l'attribut de délégation qu'il lui a allouée, mais aussi celle qu'il a allouée aux autres nœuds clients du même domaine client. On comprend que dans ce cas, tous les nœuds clients du domaine client partagent la même valeur d'attribut de délégation.

Ainsi, comme illustré par les différents modes de réalisation de l'invention qui viennent d'être décrits, l'enregistrement par le serveur S d'une association entre l'identifiant unique alloué au nœud client par le nœud client maître ou l'entité CMI, et l'identifiant du domaine client 11, non seulement fiabilise les échanges entre les agents DOTS, mais facilite et rend plus robuste la protection mise en œuvre par le serveur S contre les attaques DDoS.

### 5.3 Structures

On présente finalement, en relation avec la figure 10, les structures simplifiées d'un nœud client et d'un serveur selon l'un des modes de réalisation décrits ci-dessus.

Selon un mode de réalisation particulier, un nœud client Cm comprend une mémoire 101_{Cm} comprenant une mémoire tampon, une unité de traitement 102_{Cm}, équipée par exemple d'une machine de calcul programmable ou d'une machine de calcul dédiée, par exemple un processeur P, et pilotée par le programme d'ordinateur 103_{Cm}, mettant en œuvre des étapes du procédé d'allocation d'identifiant à un premier nœud client en charge de la gestion du trafic associé à un domaine client selon un mode de réalisation de l'invention.

A l'initialisation, les instructions de code du programme d'ordinateur 103_{Cm} sont par exemple chargées dans une mémoire RAM avant d'être exécutées par le processeur de l'unité de traitement 102_{Cm}.

Le processeur de l'unité de traitement 102_{Cm} met en œuvre des étapes du procédé d'allocation d'identifiant décrit précédemment, selon les instructions du programme d'ordinateur 103_{Cm}, pour :
- recevoir une requête d'allocation d'un identifiant de nœud client en provenance du premier nœud client, ladite requête comprenant au moins une information d'identification du nœud client;
- obtenir une liste d'identifiants de nœuds clients déjà alloués aux nœuds clients actifs au moins dans le domaine client ;
- allouer audit premier nœud client d'un identifiant de nœud client n'appartenant pas à la liste obtenue ;
- enregistrer dans une mémoire locale une association entre l'identifiant alloué et l'information d'identification du premier nœud client ;
- émettre une réponse à destination du premier nœud client, comprenant l'identifiant alloué ; et
- émettre une requête d'enregistrement de l'identifiant alloué au premier nœud client dans le domaine à au moins un serveur de gestion du trafic associé au domaine.

Selon un mode de réalisation particulier, un serveur S comprend une mémoire 101_{S} comprenant une mémoire tampon, une unité de traitement 102_{S}, équipée par exemple d'une machine de calcul programmable ou d'une machine de calcul dédiée, par exemple un processeur P, et pilotée par le programme d'ordinateur 103_{S}, mettant en œuvre des étapes du procédé d'enregistrement d'un identifiant selon un mode de réalisation de l'invention.

A l'initialisation, les instructions de code du programme d'ordinateur 103_{S} sont par exemple chargées dans une mémoire RAM avant d'être exécutées par le processeur de l'unité de traitement 102_{S}.

Le processeur de l'unité de traitement 102_{S} met en œuvre des étapes du procédé d'enregistrement d'un identifiant décrit précédemment, selon les instructions du programme d'ordinateur 103_{S}, pour :
- recevoir une requête d'enregistrement d'un premier nœud client, ladite requête comprenant un identifiant du premier nœud client, ledit identifiant ayant été alloué au premier nœud client par le nœud client Cm selon l'invention;
- obtenir un identifiant du domaine client auquel appartient le nœud client ;
- enregistrer dans une mémoire l'identifiant du premier nœud client associé à l'identifiant du domaine client obtenu.

## Revendications

1. Procédé d'allocation d'un identifiant à un premier nœud client d'un domaine client, ledit premier nœud client étant apte à gérer le trafic associé audit domaine client en vue de sa protection contre une attaque informatique, **caractérisé en ce que** ledit procédé est mis en œuvre par un dispositif d'allocation d'un identifiant et **en ce qu'**il comprend :
- la réception (21) d'une requête d'allocation d'un identifiant de nœud client en provenance du premier nœud client, ladite requête comprenant au moins une information d'identification du premier nœud client ;
- l'obtention (22) d'une liste d'identifiants de nœuds clients déjà alloués aux nœuds clients actifs au moins dans le domaine client ;
- l'allocation (23) audit premier nœud client d'un identifiant de nœud client n'appartenant pas à la liste obtenue ;
- l'enregistrement (24) dans une mémoire locale d'une association entre l'identifiant alloué et l'information d'identification du premier nœud client ;
- l'émission (26) d'une réponse à destination du premier nœud client, comprenant l'identifiant alloué ; et
- l'émission (25) d'une requête d'enregistrement de l'identifiant alloué au premier nœud client dans le domaine à au moins un serveur de gestion du trafic associé au domaine.

2. Procédé d'allocation d'un identifiant selon la revendication 1, **caractérisé en ce que**, sur détection d'un événement relatif à une activité du domaine client, le procédé comprend une modification (28) de l'association enregistrée dans la mémoire locale.

3. Procédé d'allocation d'un identifiant selon la revendication 2, **caractérisé en ce que** l'événement détecté appartient à un groupe comprenant :
- l'inactivité du premier nœud client ;
- un comportement suspect du premier nœud client ;
- la réception d'une requête de suppression reçue du premier nœud client ; et
- un nombre de nœuds clients activés dans le domaine trop élevé par rapport à un nombre maximal autorisé.

4. Procédé d'allocation d'un identifiant selon l'une des revendications 2 ou 3, **caractérisé en ce que** la modification comprend la suppression de l'enregistrement, et **en ce que** le procédé comprend l'émission d'une requête d'annulation de l'enregistrement de l'identifiant alloué à destination du serveur.

5. Procédé d'allocation d'un identifiant selon la revendication 2, **caractérisé en ce que** la modification comprend un remplacement, dans l'enregistrement de la mémoire locale, de l'information d'identification du premier noeud client par une information d'identification d'un deuxième nœud client du domaine.

6. Procédé d'allocation d'un identifiant selon l'une des revendications précédentes, **caractérisé en ce que**, la requête reçue comprenant en outre une requête d'allocation d'un attribut de délégation de gestion, ledit attribut étant destiné à être spécifié par un autre nœud client dans une requête de traitement d'une règle de gestion de trafic transmise au serveur pour déléguer au premier nœud client la gestion de ladite règle de gestion de trafic, le procédé comprend :
- L'allocation d'un attribut de délégation au premier nœud client,
- Le stockage de l'attribut alloué avec l'association dans l'enregistrement, et **en ce que**
- La réponse émise à destination du premier nœud client comprend l'attribut de délégation alloué.

7. Procédé d'enregistrement d'un identifiant alloué à un nœud client apte à gérer le trafic associé à un domaine client en vue de sa protection contre une attaque informatique, mis en œuvre dans un serveur, **caractérisé en ce que** ledit procédé comprend :
- la réception d'une requête d'enregistrement d'un premier nœud client, ladite requête comprenant un identifiant du premier nœud client, ledit identifiant ayant été alloué au premier nœud client conformément au procédé d'allocation selon l'une des revendications 1 à 6 ;
- l'obtention d'un identifiant du domaine client auquel appartient le premier nœud client ; et
- l'enregistrement dans une mémoire de l'identifiant du premier nœud client associé à l'identifiant du domaine client obtenu.

8. Procédé d'enregistrement d'un identifiant selon la revendication 7, **caractérisé en ce que**, sur réception d'une requête de traitement d'une règle de gestion de trafic émise par le premier nœud client, ladite requête comprenant l'identifiant du premier nœud client, le procédé comprend la recherche dudit enregistrement dans une mémoire et le rejet de la requête si ledit enregistrement n'a pas été trouvé.

9. Procédé d'enregistrement d'un identifiant selon la revendication 8, **caractérisé en ce que**, lorsque la requête de traitement comprend une demande de modification d'une règle de gestion de trafic installée par un deuxième nœud client, le procédé comprend :
- la vérification d'une délégation de gestion par comparaison d'un premier attribut de délégation de gestion spécifié dans la demande de modification de la règle de gestion de trafic et d'un deuxième attribut de délégation de gestion associé à la règle de gestion de trafic installée par le deuxième nœud client dans un enregistrement stocké en mémoire ;
- lorsque le premier et le deuxième attributs de délégation ont la même valeur, modification de la règle de gestion de trafic conformément à la demande.

10. Procédé d'enregistrement d'un identifiant selon l'une des revendications 7 à 9, **caractérisé en ce que**, sur réception d'une demande de suppression d'enregistrement de l'identifiant du premier nœud client, il comprend la suppression dudit enregistrement et la suppression des règles de gestion de trafic installées par le premier nœud client.

11. Procédé d'enregistrement d'un identifiant selon la revendication 10, **caractérisé en ce qu'**il comprend la notification des autres nœuds clients actifs dans le domaine client, préalablement à ladite suppression des règles de gestion de trafic installées par le premier nœud client.

12. Dispositif d'allocation d'un identifiant à un premier nœud client apte à gérer le trafic associé à un domaine client en vue de sa protection contre une attaque informatique, **caractérisé en ce que** ledit dispositif comprend au moins une machine de calcul programmable ou une machine de calcul dédiée et configurée pour mettre en œuvre :
- la réception d'une requête d'allocation d'un identifiant de nœud client en provenance du premier nœud client, ladite requête comprenant au moins une information d'identification du premier nœud client ;
- l'obtention d'une liste d'identifiants de nœuds clients déjà alloués à des nœuds clients actifs au moins dans le domaine client ;
- l'allocation au premier nœud client d'un identifiant de nœud client n'appartenant pas à la liste obtenue ;
- l'enregistrement dans une mémoire locale d'une association entre l'identifiant alloué et l'information d'identification du premier nœud client ;
- l'émission d'une réponse à destination du premier nœud client, comprenant l'identifiant alloué ; et
- l'émission d'une requête d'enregistrement de l'identifiant alloué au premier nœud client dans le domaine à au moins un serveur de gestion du trafic associé au domaine.

13. Nœud client comprenant au moins une machine de calcul programmable ou une machine de calcul dédiée configurée pour la gestion du trafic associé à un domaine client, **caractérisé en ce qu'**il comprend un dispositif d'allocation d'un identifiant à un premier nœud client selon la revendication 12.

14. Système comprenant un noeud client selon la revendication 13, qui comprend un dispositif d'allocation d'un identifiant à un premier nœud client selon la revendication 12, et un serveur comprenant au moins une machine de calcul programmable ou une machine de calcul dédiée configurée pour la gestion du trafic associé à un domaine client en vue de sa protection contre une attaque informatique, **caractérisé en ce que** ledit serveur met en œuvre :
- la réception d'une requête d'enregistrement du premier nœud client, ladite requête comprenant un identifiant du premier nœud client ;
- l'obtention d'un identifiant du domaine client auquel appartient le premier nœud client ;
- l'enregistrement dans une mémoire de l'identifiant du premier nœud client associé à l'identifiant du domaine client obtenu.

15. Produit programme d'ordinateur comprenant des instructions de code de programme pour la mise en œuvre d'un procédé selon l'une quelconque des revendications 1 à 10, lorsqu'il est exécuté par un processeur.

## Patentansprüche

1. Verfahren zur Zuweisung einer Kennung zu einem ersten Client-Knoten einer Client-Domain, wobei der erste Client-Knoten geeignet ist, den Datenverkehr, der der Client-Domain zugeordnet ist, zu deren Schutz vor einem Computerangriff zu verwalten, **dadurch gekennzeichnet, dass** das Verfahren von einer Vorrichtung zur Zuweisung einer Kennung durchgeführt wird, und dadurch, dass es Folgendes umfasst:
- Empfangen (21) einer Anfrage zur Zuweisung einer Client-Knoten-Kennung vom ersten Client-Knoten, wobei die Anfrage wenigstens eine Information zur Identifizierung des ersten Client-Knotens umfasst;
- Erhalten (22) einer Liste von Client-Knoten-Kennungen, die den Client-Knoten bereits zugewiesen sind, die wenigstens in der Client-Domain aktiv sind;
- Zuweisen (23), zum ersten Client-Knoten, einer Client-Knoten-Kennung, die nicht zu der erhaltenen Liste gehört;
- Aufzeichnen (24), in einem lokalen Speicher, einer Zuordnung zwischen der zugewiesenen Kennung und der Information zur Identifizierung des ersten Client-Knotens;
- Senden (26) einer Antwort an den ersten Client-Knoten, die die zugewiesene Kennung umfasst; und
- Senden (25) einer Anfrage zur Aufzeichnung der Kennung, die dem ersten Client-Knoten in der Domain zugewiesen ist, an wenigstens einen Server zur Verwaltung des Datenverkehrs, der der Domain zugeordnet ist.

2. Verfahren zur Zuweisung einer Kennung nach Anspruch 1, **dadurch gekennzeichnet, dass** bei Detektion eines Ereignisses in Bezug auf eine Aktivität der Client-Domain das Verfahren ein Ändern (28) der Zuordnung umfasst, die im lokalen Speicher aufgezeichnet ist.

3. Verfahren zur Zuordnung einer Kennung nach Anspruch 2, **dadurch gekennzeichnet, dass** das detektierte Ereignis zu einer Gruppe gehört, die Folgendes umfasst:
- die Inaktivität des ersten Client-Knotens;
- ein verdächtiges Verhalten des ersten Client-Knotens;
- den Empfang einer Löschanfrage, die vom ersten Client-Knoten empfangen wird; und
- eine zu hohe Anzahl von aktivierten Client-Knoten in der Domain im Verhältnis zu einer erlaubten Höchstanzahl.

4. Verfahren zur Zuweisung einer Kennung nach einem der Ansprüche 2 oder 3, **dadurch gekennzeichnet, dass** das Ändern das Löschen der Aufzeichnung umfasst, und dadurch, dass das Verfahren das Senden einer Anfrage zur Aufhebung der Aufzeichnung der zugewiesenen Kennung an den Server umfasst.

5. Verfahren zur Zuweisung einer Kennung nach Anspruch 2, **dadurch gekennzeichnet, dass** das Ändern ein Ersetzen, in der Aufzeichnung des lokalen Speichers, der Information zur Identifizierung des ersten Client-Knotens durch eine Information zur Identifizierung eines zweiten Client-Knotens der Domain umfasst.

6. Verfahren zur Zuweisung einer Kennung nach einem der vorhergehenden Ansprüche, **dadurch gekennzeichnet, dass**, die empfangene Anfrage ferner umfassend eine Anfrage zur Zuweisung eines Verwaltungsdelegationsattributs, wobei das Attribut dazu bestimmt ist, von einem anderen Client-Knoten in einer Anfrage zur Verarbeitung einer Datenverkehr-Verwaltungsregel vorgegeben zu werden, die an den Server übertragen wird, um an den ersten Client-Knoten die Verwaltung der Datenverkehr-Verwaltungsregel zu delegieren, das Verfahren Folgendes umfasst:
- Zuweisen eines Delegationsattributs zum ersten Client-Knoten,
- Speichern des zugewiesenen Attributs mit der Zuordnung in der Aufzeichnung, und dadurch, dass
- Die an den ersten Client-Knoten gesendete Antwort das zugewiesene Delegationsattribut umfasst.

7. Verfahren zur Aufzeichnung einer Kennung, die einem Client-Knoten zugewiesen ist, der geeignet ist, den Datenverkehr, der einer Client-Domain zugeordnet ist, zu deren Schutz vor einem Computerangriff zu verwalten, das in einem Server durchgeführt wird, **dadurch gekennzeichnet, dass** das Verfahren Folgendes umfasst:
- Empfangen einer Anfrage zur Aufzeichnung eines ersten Client-Knotens, wobei die Anfrage eine Kennung des ersten Client-Knotens umfasst, wobei die Kennung dem ersten Client-Knoten gemäß dem Zuordnungsverfahren nach einem der Ansprüche 1 bis 6 zugewiesen wurde;
- Erhalten einer Kennung der Client-Domain, zu welcher der erste Client-Knoten gehört; und
- Aufzeichnen in einem Speicher der Kennung des ersten Client-Knotens, der der erhaltenen Kennung der Client-Domain zugeordnet ist.

8. Verfahren zur Aufzeichnung einer Kennung nach Anspruch 7, **dadurch gekennzeichnet, dass** bei Empfang einer Anfrage zur Verarbeitung einer Datenverkehr-Verwaltungsregel, die vom ersten Client-Knoten gesendet wird, die Anfrage umfassend die Kennung des ersten Client-Knotens, das Verfahren das Suchen nach der Aufzeichnung in einem Speicher und das Verwerfen der Anfrage, wenn die Aufzeichnung nicht gefunden wurde, umfasst.

9. Verfahren zur Aufzeichnung einer Kennung nach Anspruch 8, **dadurch gekennzeichnet, dass**, wenn die Verarbeitungsanfrage eine Anforderung zur Änderung einer Datenverkehr-Verwaltungsregel umfasst, die von einem zweiten Client-Knoten eingerichtet ist, das Verfahren Folgendes umfasst:
- Überprüfen einer Verwaltungsdelegation durch Vergleich eines ersten Verwaltungsdelegationsattributs, das in der Anforderung zur Änderung der Datenverkehr-Verwaltungsregel vorgegeben ist, und eines zweiten Verwaltungsdelegationsattributs, das der Datenverkehr-Verwaltungsregel zugeordnet ist, die vom zweiten Client-Knoten in einer Aufzeichnung eingerichtet ist, die im Speicher gespeichert ist;
- wenn das erste und zweite Delegationsattribut denselben Wert aufweisen, Ändern der Datenverkehr-Verwaltungsregel entsprechend der Anforderung.

10. Verfahren zur Aufzeichnung einer Kennung nach einem der Ansprüche 7 bis 9, **dadurch gekennzeichnet, dass** es bei Empfang einer Anforderung zur Löschung einer Aufzeichnung der Kennung des ersten Client-Knotens das Löschen der Aufzeichnung und das Löschen der Datenverkehr-Verwaltungsregeln, die vom ersten Client-Knoten eingerichtet sind, umfasst.

11. Verfahren zur Aufzeichnung einer Kennung nach Anspruch 10, **dadurch gekennzeichnet, dass** es das Benachrichtigen der anderen aktiven Client-Knoten in der Client-Domain vor der Löschung der Datenverkehr-Verwaltungsregeln, die vom ersten Client-Knoten eingerichtet sind, umfasst.

12. Vorrichtung zur Zuweisung einer Kennung zu einem ersten Client-Knoten, der geeignet ist, den Datenverkehr, der einer Client-Domain zugeordnet ist, zu deren Schutz vor einem Computerangriff zu verwalten, **dadurch gekennzeichnet, dass** die Vorrichtung wenigstens eine programmierbare Rechenmaschine oder eine dedizierte Rechenmaschine umfasst und dazu ausgebildet ist, Folgendes durchzuführen:
- Empfangen einer Anfrage zur Zuweisung einer Client-Knoten-Kennung vom ersten Client-Knoten, wobei die Anfrage wenigstens eine Information zur Identifizierung des ersten Client-Knotens umfasst;
- Erhalten einer Liste von Client-Knoten-Kennungen, die Client-Knoten bereits zugewiesen sind, die wenigstens in der Client-Domain aktiv sind;
- Zuweisen, zum ersten Client-Knoten, einer Client-Knoten-Kennung, die nicht zu der erhaltenen Liste gehört;
- Aufzeichnen, in einem lokalen Speicher, einer Zuordnung zwischen der zugewiesenen Kennung und der Information zur Identifizierung des ersten Client-Knotens;
- Senden einer Antwort an den ersten Client-Knoten, die die zugewiesene Kennung umfasst; und
- Senden einer Anfrage zur Aufzeichnung der Kennung, die dem ersten Client-Knoten in der Domain zugewiesen ist, an wenigstens einen Server zur Verwaltung des Datenverkehrs, der der Domain zugeordnet ist.

13. Client-Knoten umfassend wenigstens eine programmierbare Rechenmaschine oder eine dedizierte Rechenmaschine, die für die Verwaltung des Datenverkehrs ausgebildet ist, der einer Client-Domain zugeordnet ist, **dadurch gekennzeichnet, dass** er eine Vorrichtung zur Zuweisung einer Kennung zu einem ersten Client-Knoten nach Anspruch 12 umfasst.

14. System umfassend einen Client-Knoten nach Anspruch 13, der eine Vorrichtung zur Zuweisung einer Kennung zu einem ersten Client-Knoten nach Anspruch 12 umfasst, und einen Server, der wenigstens eine programmierbare Rechenmaschine oder eine dedizierte Rechenmaschine umfasst, die für die Verwaltung des Datenverkehrs, der einer Domain zugeordnet ist, zu deren Schutz vor einem Computerangriff ausgebildet ist, **dadurch gekennzeichnet, dass** der Server Folgendes durchführt:
- Empfangen einer Aufzeichnungsanfrage vom ersten Client-Knoten, wobei die Anfrage eine Kennung des ersten Client-Knotens umfasst;
- Erhalten einer Kennung der Client-Domain, zu welcher der erste Client-Knoten gehört;
- Aufzeichnen in einem Speicher der Kennung des ersten Client-Knotens, der der erhaltenen Kennung der Client-Domain zugeordnet ist.

15. Computerprogrammprodukt umfassend Programmcode-Anweisungen für die Durchführung eines Verfahrens nach einem der Ansprüche 1 bis 10, wenn es von einem Prozessor ausgeführt wird.

## Claims

1. Method for allocating an identifier to a first client node of a client domain, said first client node being able to manage traffic associated with said client domain with a view to protecting it against a cyber attack, **characterized in that** said method is implemented by a device for allocating an identifier and **in that** it comprises:
- receiving (21), from the first client node, a request to allocate a client-node identifier, said request comprising at least one datum identifying the first client node;
- obtaining (22) a list of client-node identifiers already allocated to active client nodes at least in the client domain;
- allocating (23) to said first client node a client-node identifier not belonging to the obtained list;
- recording (24), in a local memory, an association between the allocated identifier and the datum identifying the first client node;
- sending (26) a response comprising the allocated identifier to the first client node; and
- sending (25) a request to record the identifier allocated to the first client node in the domain to at least one server managing traffic associated with the domain.

2. Method for allocating an identifier according to Claim 1, **characterized in that**, on detection of an event relating to an activity of the client domain, the method comprises a modification (28) of the association recorded in the local memory.

3. Method for allocating an identifier according to Claim 2, **characterized in that** the detected event belongs to a group comprising:
- inactivity of the first client node;
- suspicious behaviour of the first client node;
- receipt of a delete request from the first client node; and
- a number of client nodes activated in the domain that is too high with respect to a permitted maximum number.

4. Method for allocating an identifier according to either of Claims 2 and 3, **characterized in that** the modification comprises deleting the record, and **in that** the method comprises sending a request to delete the record of the allocated identifier to the server.

5. Method for allocating an identifier according to Claim 2, **characterized in that** the modification comprises replacing, in the record of the local memory, the datum identifying the first client node with a datum identifying a second client node of the domain.

6. Method for allocating an identifier according to one of the preceding claims, **characterized in that**, the received request further comprising a request to allocate a management-delegation attribute, said attribute being intended to be specified by another client node in a request to process a traffic-management rule transmitted to the server with a view to delegating, to the first client node, management of said traffic-management rule, the method comprises:
- allocating a delegation attribute to the first client node,
- storing the allocated attribute with the association in the record, and **in that**
- the response sent to the first client node comprises the allocated delegation attribute.

7. Method for recording an identifier allocated to a client node able to manage traffic associated with a client domain with a view to protecting it against a cyber attack, said method being implemented in a server and being **characterized in that** it comprises:
- receiving a request to record from a first client node, said request comprising an identifier of the first client node, said identifier having been allocated to the first client node using the allocating method according to one of Claims 1 to 6;
- obtaining an identifier of the client domain to which the first client node belongs; and
- recording in a memory the identifier of the first client node associated with the identifier of the obtained client domain.

8. Method for recording an identifier according to Claim 7, **characterized in that**, on reception of a request to process a traffic-management rule sent by the first client node, said request comprising the identifier of the first client node, the method comprises searching for said record in a memory and rejecting the request if said record has not been found.

9. Method for recording an identifier according to Claim 8, **characterized in that**, when the request to process comprises a demand to modify a traffic-management rule installed by a second client node, the method comprises:
- verifying a management delegation by comparing a first management-delegation attribute specified in the demand to modify the traffic-management rule and a second management-delegation attribute associated with the traffic-management rule installed by the second client node in a record saved to memory;
- when the first and second delegation attributes have the same value, modifying the traffic-management rule according to the demand.

10. Method for recording an identifier according to one of Claims 7 to 9, **characterized in that**, on reception of a demand to delete a record of the identifier of the first client node, it comprises deletion of said record and deletion of the traffic-management rules installed by the first client node.

11. Method for recording an identifier according to Claim 10, **characterized in that** it comprises notifying the other client nodes active in the client domain, prior to said deletion of the traffic-management rules installed by the first client node.

12. Device for allocating an identifier to a first client node able to manage traffic associated with a client domain with a view to protecting it against a cyber attack, **characterized in that** said device comprises at least one programmable computing machine or one dedicated computing machine configured to:
- receive, from the first client node, a request to allocate a client-node identifier, said request comprising at least one datum identifying the first client node;
- obtain a list of client-node identifiers already allocated to active client nodes at least in the client domain;
- allocate to the first client node a client-node identifier not belonging to the obtained list;
- record, in a local memory, an association between the allocated identifier and the datum identifying the first client node;
- send a response comprising the allocated identifier to the first client node; and
- send a request to record the identifier allocated to the first client node in the domain to at least one server managing traffic associated with the domain.

13. Client node comprising at least one programmable computing machine or one dedicated computing machine configured to manage traffic associated with a client domain, **characterized in that** it comprises a device for allocating an identifier to a first client node according to Claim 12.

14. System comprising a client node according to Claim 13, which comprises a device for allocating an identifier to a first client node according to Claim 12, and a server comprising at least one programmable computing machine or one dedicated computing machine configured to manage traffic associated with a client domain with a view to protecting it against a cyber attack, **characterized in that** said server:
- receives a request to record from the first client node, said request comprising an identifier of the first client node;
- obtains an identifier of the client domain to which the first client node belongs;
- records in a memory the identifier of the first client node associated with the identifier of the obtained client domain.

15. Computer program product comprising program-code instructions for implementing a method according to any one of Claims 1 to 10, when it is executed by a processor.
